(19) Europäisches Patentamt
European Patent Office
Office européen des brevets

(11) **EP 1 924 092 A1**

(12) **EUROPEAN PATENT APPLICATION**
published in accordance with Art. 153(4) EPC

(43) Date of publication:
**21.05.2008 Bulletin 2008/21**

(51) Int Cl.:
*H04N 5/76* (2006.01)  *G11B 20/10* (2006.01)
*G11B 27/10* (2006.01)  *H04N 5/93* (2006.01)

(21) Application number: **06796634.1**

(22) Date of filing: **22.08.2006**

(86) International application number:
**PCT/JP2006/316420**

(87) International publication number:
**WO 2007/029489 (15.03.2007 Gazette 2007/11)**

(84) Designated Contracting States:
**DE FR GB**

(30) Priority: **07.09.2005 JP 2005259898**

(71) Applicant: **Pioneer Corporation**
**Tokyo 153-8654 (JP)**

(72) Inventors:
• **NAKAMURA, Takeshi**
**Tsurugashima-shi, Saitama 3502288 (JP)**

• **YAMAMOTO, Takayoshi**
**Meguro-ku, Tokyo 1538654 (JP)**

(74) Representative: **Haley, Stephen**
**Gill Jennings & Every LLP**
**Broadgate House**
**7 Eldon Street**
**London EC2M 7LH (GB)**

(54) **CONTENT REPLAY APPARATUS, CONTENT REPRODUCING APPARATUS, CONTENT REPLAY METHOD, CONTENT REPRODUCING METHOD, PROGRAM AND RECORDING MEDIUM**

(57)    A content replay apparatus includes an obtaining unit (101), a property extracting unit (102), a detecting unit (105), and an output unit (106). The obtaining unit (101) obtains a content to be played. The property extracting unit (102) extracts property values of the content obtained by the obtaining unit (101). The detecting unit (105) detects, when a replay instruction, is input, a start point of a specific scene of the content, the start point having a property value equal to or more than a threshold and closest to an input time of the replay instruction. The output unit (106) outputs the content from the start point detected by the detecting unit (105).

## FIG.1

**Description**

TECHNICAL FIELD

The present invention relates to a content replay apparatus, a content playback apparatus, a content replay method, a content playback method, a program, and a recording medium. However, application of the invention is not limited to the content replay apparatus, the content playback apparatus, the content replay method, the content playback method, the program, and the recording medium.

BACKGROUND ART

To re-watch the same scene of a content such as a movie or music, for example, the content must be returned to the starting point of the scene and played back (replay) therefrom. To simplify the troublesome operation above, conventionally, for example, a technique has been proposed in which images received by one tuner are played back while images received by another tuner are recorded simultaneously, and when a highlight scene among the images in play is automatically detected, the user is notified and according to user operation, the highlight scene is replayed using the recorded images (see, for example, Patent Document 1 below). Another technique, for example, upon a replay operation initiated by the user, replays the content from a point preceding, by a given time interval, the point at which the replay operation is initiated (see, for example, Patent Document 2 below).

Patent Document 1: Japanese Patent Application Laid-open Publication No. 2003-134415
Patent Document 2: Japanese Patent Application Laid-open Publication No. 2003-333463

DISCLOSURE OF INVENTION

PROBLEM TO BE SOLVED BY THE INVENTION

However, with the conventional technique above (disclosed in Patent Document 1), a problem arises in that only the automatically-detected highlight scene can be replayed irrespective of user intention; hence, a scene that is not automatically detected cannot be replayed, nor can the scene be replayed according to a timing intended by the user.

Furthermore, with the conventional technique above (disclosed in Patent Document 2), there is a problem in that the content is played from a point upstream that is determined by and incremented by a given time interval from the point at which the replay operation is initiated and hence, the start point of the highlight scene to be replayed and the start point intended by the user do not always coincide.

MEANS FOR SOLVING PROBLEM

A content replay apparatus according to the invention of claim 1 includes an obtaining unit that obtains a content to be played; a property extracting unit that extracts property values of the content; a detecting unit that detects, when a replay instruction is input, a start point of a specific scene of the content, the start point having a property value that is equal to or more than a threshold and closest to an input time of the replay instruction; and an output unit that outputs the content from the start point.

A content replay apparatus according to the invention of claim 2 includes an obtaining unit that obtains a content to be played; a property extracting unit that extracts property values of the content; a detecting unit that detects, when a replay instruction is input, a start point of a specific scene of the content within a detection interval of a predetermined time period and preceding an input time of the replay instruction, the start point having a property value equal to or more than a threshold; and an output unit that outputs the content from the start point.

A content playback apparatus according to the invention of claim 7 includes an obtaining unit that obtains a content to be played; a reading unit that reads the content obtained by the obtaining unit; a property extracting unit that extracts property values of the content read by the reading unit; a detecting unit that detects, when a replay instruction is input, a start point of a specific scene of the content, the start point having a property value equal to or more than a threshold and closest to an input time of the replay instruction; and an output unit that sequentially outputs the content read by the reading unit, and if the detecting unit detects the start point, outputs the content from the start point.

A content replay method according to the invention of claim 8 includes an obtaining step of obtaining a content to be played; a property extracting step of extracting property values of the content; a detecting step of detecting, when a replay instruction is input, a start point of a specific scene of the content, the start point having a property value equal to or more than a threshold and closest to an input time of the replay instruction; and an output step of outputting the content from the start point.

A content replay method according to the invention of claim 9 includes an obtaining step of obtaining a content to be played; a property extracting step of extracting property values of the content; a detecting step of detecting, when a replay instruction is input, a start point of a specific scene of the content within a detection interval of a predetermined time period and preceding an input time of the replay instruction, the specific scene having a property value equal to or more than a threshold; and an output step of outputting the content from the start point.

A content playback method according to the invention of claim 10 includes an obtaining step of obtaining a content to be played; a reading step of reading the content obtained at the obtaining step; a property extracting step of extracting property values of the content read at the reading step; a detecting step of detecting, when a replay instruction is input, a start point of a specific scene of the content, the start point having a property value equal to or more than a threshold and closest to an input time of the replay instruction; and an output step of sequentially outputting the content read at the reading step, and if the start point is detected at the detecting step, outputting the content from the start point.

A program according to the invention of claim 11 causes a computer to execute the method according to any one of claims 8 to 10.

A recording medium according to the invention of claim 12 stores therein the program according to claim 11.

BRIEF DESCRIPTION OF DRAWINGS

Fig. 1 is a block diagram of a functional configuration of a content replay apparatus according to an embodiment;
Fig. 2 is a flowchart of a process performed by the content replay apparatus according to the embodiment;
Fig. 3 is a block diagram of a hardware configuration of a recording and playback apparatus according to an example 1;
Fig. 4 is a schematic of key arrangement of a remote controller according to the example 1;
Fig. 5 is an explanatory diagram of a ring buffer included in the recording and playback apparatus according to the example 1;
Fig. 6 is a flowchart of a recording process according to the example 1;
Fig. 7 is a flowchart of a replay process according to the example 1;
Fig. 8 is a flowchart of a start-point detection process according to the example 1.
Fig. 9 is a flowchart of an end-point detection process according to the example 1;
Fig. 10 is a flowchart of a detection-interval setting process according to the example 1;
Fig. 11 is a block diagram of a hardware configuration of a recording and playback apparatus according to an example 2;
Fig. 12 is an explanatory diagram of a database included in the recording and playback apparatus according to the example 2;
Fig. 13 is a flowchart of a recording process according to the example 2;
Fig. 14 is a flowchart of a replay process according to the example 2; and
Fig. 15 is a flowchart of a highlight selection process according to the example 2.

EXPLANATIONS OF LETTERS OR NUMERALS

101 obtaining unit
102 property extracting unit
103 priority calculating unit
105 detecting unit
106 output unit

BEST MODE(S) FOR CARRYING OUT THE INVENTION

Referring to the accompanying drawings, exemplary embodiments of the content replay apparatus, the content playback apparatus, the content replay method, the content playback method, the program, and the recording medium according to the present invention are explained in detail below.

(Functional Configuration of Content Replay Apparatus)

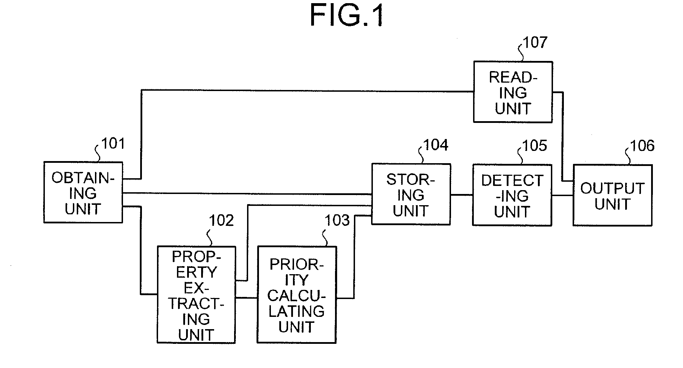

Fig. 1 is a block diagram of a functional configuration of a content replay apparatus according to an embodiment. As shown in Fig. 1, the content replay apparatus includes an obtaining unit 101, a property extracting unit 102, a priority calculating unit 103, a storing unit 104, a detecting unit 105, an output unit 106 and a reading unit 107.

The obtaining unit 101 obtains a content to be played. The content may be, for example, a TV program broadcasted in real-time in addition to a content stored on a recording medium. Furthermore, the content may include both images and audio, only images, or only audio. Moreover, the content may be stored on a recording medium or broadcasted in real-time such as TV or radio programs.

The property extracting unit 102 extracts property values of the content obtained by the obtaining unit 101. The property values are predetermined data that are included in the content and have been digitized. For example, the property extracting unit 102 extracts, as the property values, data that is a digitization of the volume of the audio in the content. Alternately, for example, the property values may include data indicating the number of times scene change occurs per unit time, data indicating the frequency of captions inserted per unit time, data indicating the size of characters in the content, and data indicating the state of camera work, the property values not being limited hereto.

The priority calculating unit 103 calculates, based on the property values extracted by the property extracting unit 102, a priority of each property value. Specifically, for example, when the content is a TV program broadcast of a soccer game, the priority is calculated such that an important event such as the scoring of a goal or a fine-save scene (hereinafter, "highlight scene") has a higher priority than other scenes.

When the volume of the audio in a TV program broadcast of a soccer game is extracted as the property values, for example, the priority calculating unit 103 judges the volume of the audio based on the property values and calculates the priority such that a scene having a larger volume has a higher priority than other scenes. The priority is calculated only for scenes judged to be highlight scenes based on the property values, and the highest priority calculated for a highlight scene is regarded as the priority for the highlight scene. The priority is calculated for each highlight scene.

The storing unit 104 stores the content obtained by the obtaining unit 101 and the property values extracted by the property extracting unit 102. Further, the storing unit 104 stores the priority calculated by the priority calculating unit 103. The property values and the priority are stored with the position information of the content correlated thereto. As a result, where the extracted property value or the calculated priority is located in the content can be identified.

When a priority is calculated for each highlight scene, the storing unit 104 may store the priority for each highlight scene. Further, the storing unit 104 may store only the highlight scene having a priority equal to or more than a threshold.

When a replay instruction is input, the detecting unit 105 detects, from a given interval of the content immediately preceding the time of the input of the replay instruction (hereinafter, "detection interval"), the start point of a specific scene having a property value equal to or greater than a threshold. Specifically, for example, when the volume of the audio of a TV program broadcast of a soccer game is extracted as the property value and the volume becomes higher due to the loud roar of the spectators, the property value corresponding to that part also indicates a higher value. The part having a property value greater than the threshold is detected as the start point of the specific section. In other words, the detecting unit 105 detects a start point of the highlight scene as the start point of the specific scene.

When plural start points of plural specific scenes are detected within the detection interval, the detecting unit 105 detects the start point having the highest priority within the detection interval. Alternatively, when plural start points of plural specific scenes are detected within the detection interval, the detecting unit 105 may detect the start point closest to the input time of the replay instruction. The detection interval is not limited to the given interval before the input time of the replay instruction and may be a given interval after the input time of the replay instruction. In this case, the start point of the highlight scene is detected not only from the content before the input time of the replay instruction, but also from the content after the input time of the replay instruction.

Additionally, the detecting unit 105 may change the detection interval or the time period of the detection interval, and detect the start point of the specific scene within the changed detection interval. Input patterns of the replay instruction may be differentiated by differentiating key operations to input the replay instruction, for example.

Specifically, for example, when the replay instruction is input using a single key, key operation patterns can be differentiated by differentiating the number of key manipulations. More specifically, a key manipulation is performed one time to input regular replay instruction, and the key manipulation is performed plural times to change the detection interval or the time period of the detection interval.

Alternatively, for example, key patterns to input the replay instruction may be differentiated by differentiating the key used to input the regular replay instruction from a key used to change the detection interval or the time period of the detection interval.

The detecting unit 105 may detect the start point of the specific scene by calculating, as appropriate, priority based on the property values extracted by the property extracting unit 102, in lieu of using the priority calculated by the priority calculating unit 103. For example, the property of focus is changed according a TV program genre (example: a part having large audio volume in the case of a sports program, and a part after a silence in the case of a news program), or the priority is corrected according to a point in a program with respect to time (example: the last half of the program is focused on). In this case, the priority calculating unit 103 is unnecessary, the similar function is performed by the detecting unit 105.

Furthermore, the detecting unit 105 detects, from the content after the start point of the specific scene, an end point of the specific scene, the end point having the property value that is less than another threshold different from the threshold used for detecting the start point of the specific scene. Specifically, for example, when the audio volume in the content of a TV program broadcast of a soccer game is extracted as the property values, at the end of a highlight scene, the sound of the spectators decreases and the property values return to the state prior to the highlight scene. The detecting unit 105 detects, based on the above change in the property values, an end point of the highlight scene as the end point of the specific scene.

The output unit 106 outputs, as the highlight scene, the content from the start point to the end point of the specific scene detected by the detecting unit 105. Specifically, for example, the output unit 106 outputs images and audio using a display and a speaker. When an end point of the specific scene is not detected, the output unit 106 outputs the content from the start point of the specific scene until an end point thereof is detected.

The reading unit 107 reads the content obtained by the obtaining unit 101. For example, the reading unit 107 reads the content in a positive time direction. When the content is a TV program being broadcasted, the reading unit 107 reads the content in a direction in which absolute time elapses. The output unit 106 sequentially outputs the content read by the reading unit 107.

(Process Performed by Content Replay Apparatus)

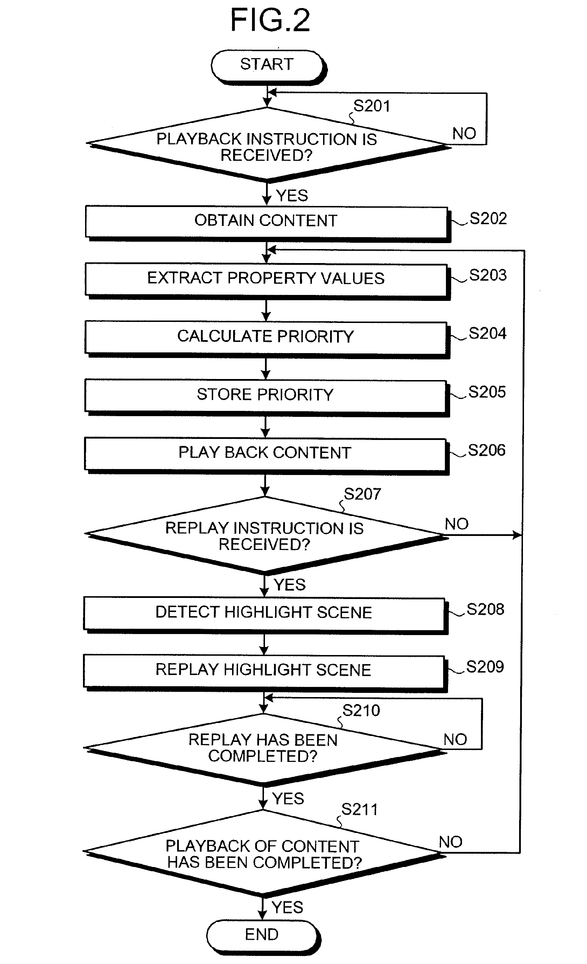

A process performed by the content replay apparatus is explained. Fig. 2 is a flowchart of the process performed by the content replay apparatus. As shown in Fig. 2, a content playback instruction is waited for (step S201: NO), when the content playback instruction is received (step S201: YES), the obtaining unit 101 obtains the content identified by the playback instruction (step S202). Although not shown in Fig. 2, the obtained content is read by the reading unit 107 and sequentially output to the output unit 106 in the order read.

The property extracting unit 102 extracts property values of the content obtained at step S202 (step S203), the priority calculating unit 103 calculates a priority based on the extracted property values (step S204), and the storing unit 104 stores the calculated priority (step S205).

While the content obtained at step S202 is played back (step S206), it is determined whether a replay instruction is received (step S207). When the replay instruction is not received (step S207: NO), the process returns to step S203 and continues the playback of the content.

When the replay instruction is received at step S207 (step S207: YES), the detecting unit 105 detects a highlight scene (step S208), and the detected highlight scene is replayed (step S209). At step S208, the detecting unit 105 detects, as the highlight scene, a specific scene (from a start point to an end point) of the content. Until the replay of the highlight scene is completed (step S210: NO), the replay of the highlight scene is continued.

When the replay of the highlight scene is completed (step S210: YES), it is judged whether the playback of the content is completed (step S211). When the playback of the content is not completed (step S211: NO), the process returns to step S203. When the playback of the content is completed (step S211: YES), the process ends.

As explained above, according to the content replay apparatus, when a replay instruction is received, the content after the start point within the detection interval and having a property value equal to or greater than a threshold is output. As a result, a user can replay, simply by an operation to request the replay of a highlight scene, the highlight scene corresponding to the operation timing, resulting in simplicity of the operation for replaying the highlight scene and optimization of the highlight scene.

By extracting and storing all of the property values of the obtained content, a highlight scene can be replayed based on the property values whenever the replay instruction is received at any time.

Furthermore, according to the content replay apparatus of the embodiment, the content from the start point to the end point of the specific scene is output as the highlight scene. Thus, by specifying the end point of the highlight scene, the highlight scene can be repeatedly replayed, and return to normal playback can be enabled after the replay is completed.

Additionally, according to the content replay apparatus of the embodiment, the content that is after the start point having the highest priority of the property value is output as the highlight scene. As a result, the highlight scene assumed to be replayed can be replayed at the timing required by a user. For example, by storing only the highlight scene having the priority equal to or greater than a threshold, the amount of data stored for detecting the highlight scene can be reduced compared with a case in which property values are used.

When there are plural start points of plural specific scenes within the detection interval, a start point of a specific scene closest to the input time of the replay instruction is detected instead of using the priority calculated by the priority calculating unit 103. Accordingly, for example, the highlight scene just before the input time of the replay instruction can be replayed. As a result, the highlight scene missed by a user can be replayed and the content replay apparatus can be provided suitable for such use.

Furthermore, according to the content replay apparatus of the embodiment, the detection interval or the time period of the detection interval can be changed according to an input pattern of the replay instruction, and a highlight scene can be detected within the changed detection interval. As a result, highlight scenes can be replayed flexibly corresponding to a user request.

According to the content replay apparatus of the embodiment, the content that is obtained by the obtaining unit and read by the reading unit can be output by the output unit. When the replay instruction is received, a start point of a specific scene closest to the input time of the replay instruction is detected by the detecting unit from among the start points of the specific scenes each having a property value that is retrieved by the property extracting unit and exceeding a threshold, and the content after the detected start point of the specific scene can be output by the output unit. As a result, when a user wants to enjoy normal playback of the content and at the same time, replay a highlight scene on command, the highlight scene requested by the user can be accordingly replayed.

[Example 1]

An example 1 of a recording and playback apparatus according to the embodiment is explained. The example 1 is a case in which the content replay apparatus according to the embodiment is applied to a recording and playback apparatus that can record contents such as TV programs and play back the recorded contents.

(Hardware Configuration of Recording and Playback Apparatus)

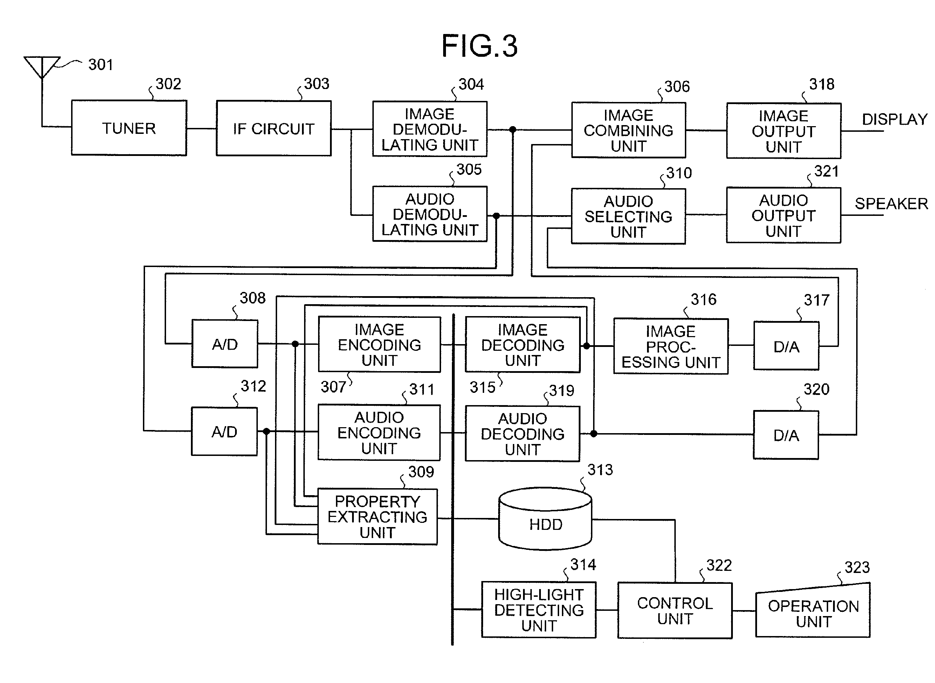

Fig. 3 is a block diagram of a hardware configuration for the recording and playback apparatus according to the example 1. As shown in Fig. 3, the recording and playback apparatus includes an antenna 301, a tuner 302, an IF circuit 303, an image demodulating unit 304, an audio demodulating unit 305, an image combining unit 306, an image encoding unit 307, an A/D converter 308 and 312, a property extracting unit 309, an audio selecting unit 310, an audio encoding unit 311, an HDD 313, a highlight detecting unit 314, an audio decoding unit 315, an audio processing unit 316, a D/A converter 317 and 320, an image output unit 318, an audio decoding unit 319, an audio output unit 321, a control unit 322, and an operation unit 323.

The antenna 301 receives, for example, a radio wave (for example, a TV wave) that is modulated at a broadcast station such as a TV station and includes an electric signal of a program (for example, a TV program) transmitted with a high-frequency carrier wave. The received radio wave is output to the tuner 302 as a received signal.

Specifically, the antenna 301 includes, for example, a director, a feed element, a reflector, etc. Since these are common techniques, detailed explanation thereof is omitted. The director is an element for receiving a radio wave in the air. The feed element is an element for providing, to a tuner, the radio wave received by the director. The reflector is an element for reflecting, towards the feed element, the radio wave that is not received by the director.

The tuner 302 adjusts the wavelengths of the radio wave received by the antenna 301, for example, and output the adjusted radio wave to the IF circuit 303. The IF circuit 303 amplifies the IF signal output from the tuner 302 and detects a video signal and an audio signal from the amplified IF signal. Specifically, the IF circuit 303 detects an NTSC-composite video signal or an audio signal from beat components of 4.5 MHz, for example. The video signal detected by the IF circuit 303 is output to the image demodulating unit 304, while the audio signal is output to the audio demodulating unit 305. Hereinafter, video signals and audio signals that constitute a program exemplify the content in the example 1.

The image demodulating unit 304 demodulates the video signal output from the IF circuit 303. The video signal demodulated by the image demodulating unit 304 is output to the image combining unit 306 and the image encoding unit 307. The video signal to be output to the image encoding unit 307 is subjected to analog-to-digital (A/D) conversion by the A/D converter 308 and output to the image encoding unit 307. The video signal subjected to the A/D conversion by the A/D converter 308 is also output to the property extracting unit 309.

The audio demodulating unit 305 demodulates the audio signal output from the IF circuit 303. The audio signal demodulated by the audio demodulating unit 305 is output to the audio selecting unit 310 and the audio encoding unit 311. The audio signal to be output to the audio encoding unit 311 is subjected to an analog-to-digital (A/D) conversion by the A/D converter 312 and output to the audio encoding unit 311. The audio signal subjected to the A/D conversion by the A/D converter 312 is also output to the property extracting unit 309.

The image encoding unit 307 encodes the video signal subjected to the A/D conversion by the A/D converter 308. The image encoding unit 307 compresses the video signal in addition to the encoding. For example, MPEG-2 is used as a compression technique. MPEG-4, ITU-T, H.264, etc. may be used as the compression technique having high compression efficiency. The video signal encoded by the image encoding unit 307 is stored in the HDD 313.

The audio encoding unit 311 encodes the audio signal subjected to the A/D conversion by the A/D converter 312. The audio encoding unit 311 compresses the audio signal in addition to the encoding. MPEG-1 Audio Layer-2, MPEG-1 Audio Layer 3 (MP3), MPEG-2 Audio ACC, Dolby AC3, etc. are used as the compression technique. The audio signal encoded by the audio encoding unit 311 is stored in the HDD 313.

The property extracting unit 309 extracts property values from the content. The property values are data used for detecting a scene important for a user (hereinafter, "highlight scene"). For example, when the content is a broadcasted baseball game, the highlight scene includes scenes of a homerun, a timely hit, a fine play, etc.

A baseball game broadcast includes a relatively large number of images that have limited ranges of motion, such as images of the periphery of the mound focusing on the pitcher, the periphery of the plate focusing on a batter, the battery, etc. In contrast, in the case of a homerun, many images of motions differing from the more common motions are included, such as a batter running the bases, team mates congratulating the batter, and delighted spectators. In some cases, these images are switched one after another to convey the mood and atmosphere. Furthermore, a caption indicating the earned run is superimposed on the images of the broadcasted game.

For example, video signals are used for extracting property values, the property extracting unit 309 extracts, as the property values, specific information that is digitized and obtained from the video signals such as the motion of a person and/or an object in an image (change in size and intensity of the motion), a scene change (for example, frequency of scene changes per unit time), camera work (for example, execution frequency of zooming in and out), a caption (for example, insertion frequency of captions).

Furthermore, audio signals are used for extracting the property values. Specifically, in the case of a broadcasted baseball game, since a voice tone of an announcer reporting the game becomes higher, and the announcer and spectators get louder during a homerun, digitized information concerning the audio tone (high/low) and the volume (high/low) can be extracted as the property values. Furthermore, text data is generated by sound recognition and property values can be extracted from the text data. The property values are not limited thereto. Specifically, upon extracting the property values, for example, predetermined calculation processing for digitizing the audio tone (high/low) and the volume (high/low) can be performed.

The property values extracted by the property extracting unit 309 are stored in the HDD 313. Although not shown, the HDD 313 includes a table for storing the extracted property values and positions thereof. The position of a property values is represented by absolute time (in units of seconds) in which a start point of a program is set to 0. The unit of the position of the property value may be a frame or absolute time.

The highlight detecting unit 314 detects a highlight scene based on the property values extracted by the property extracting unit 309. Specifically, for example, when the motion of persons and objects in an image are extracted as the property, a scene in which the size and the intensity of the motion changes dynamically from previous images is extracted as the highlight scene.

Specifically, for example, a scene that changes dynamically from the previous images is detected using the frequency of scene changes per unit time, camera work such as zooming in and out, presence of captions, etc. Alternatively, for example, a scene in which a level of the audio tone (high/low) and the volume (high/low) is greater than a predetermined level may be extracted as the highlight scene.

The image decoding unit 315 decodes the video signal encoded and stored in the HDD 313. The video signal decoded by the image decoding unit 315 is output to the image processing unit 316 and the property extracting unit 309. The image processing unit 316 performs predetermined image processing on the video signal output from the image decoding unit 315. The video signal processed by the image processing unit 316 is subjected to a digital-to-analog (D/A) conversion by the D/A converter 317, and output to the image combining unit 306.

The image combining unit 306 combines, as required, the video signal output from the image demodulating unit 304 and the video signal output from the image processing unit 316 through the D/A converter 317. Specifically, for example, in the case of split-screen display, the image combining unit 306 converts the video signals output from the image demodulating unit 304 and the image processing unit 316 into image signals for the split screens, and combines the converted image signals to generate an image for one screen. The video signals combined by the image combining unit 306 are output to the image output unit 318.

The image output unit 318 controls a display connected thereto. For example, when the display displays color images, the image output unit 318 includes a graphic controller that controls the overall display, a buffer memory such as a video ram (VRAM) that temporally stores instantaneously displayable image data, and a control integrated circuit (IC) that controls the display based on the image data output from the graphic controller.

The audio decoding unit 319 decodes the encoded audio signal stored in the HDD 313. The audio signal decoded by the audio decoding unit 319 is output to the audio selecting unit 310 through the D/A converter 320 and to the property extracting unit 309. The audio selecting unit 310 selectively outputs, to the audio output unit 321, the audio signal output from the audio demodulating unit 305 or the audio signal output from the audio decoding unit 319 through the D/A converter.

The audio output unit 321 controls a speaker connected thereto based on the audio signal output from the audio selecting unit 310. The speaker controlled by the audio output unit 321 may be one or plural. Specifically, for example, the audio output unit 321 is implemented by an audio I/F connected to a speaker for audio output. More specifically, for example, the audio I/F may include a D/A converter that performs a D/A conversion on digital audio data, an amplifier that amplifies the analog audio signal output from the D/A converter, and an A/D converter that performs an A/D conversion on analog audio data.

The control unit 322 controls each unit included in the recording and playback apparatus. Specifically, for example, the control unit 322 can be implemented by a micro-computer that includes a central processing unit (CPU) for performing a predetermined calculation, a read only memory (ROM) that stores various programs, and a random access memory (RAM) that functions as a work area of CPU, etc.

Specifically, for example, the control unit 322 controls the image signal encoded by the image encoding unit 307, the audio signal encoded by the audio encoding unit 311, and writing and reading of the property values extracted by the property extracting unit 309 to and from the HDD 313. The control unit 322 controls, when a playback instruction for a content is input through the operation unit 323, for example, the HDD 313 to read the corresponding data therefrom. Furthermore, the control unit 322 outputs, to the tuner 302, a channel setting signal to select a desired program, for example.

Although not shown, a replay flag area to set a viewing mode is provided in a ROM and a RAM in the control unit 322. When the viewing mode is a normal viewing mode, Replay Flag=False is set in the replay flag area, and when the viewing mode is a replay mode, Replay Flag=True is set therein.

Although not shown, a replay-position management table to store a start point $T_{hs}$ and an end point $T_{he}$ of a highlight scene to be replayed is provided in the ROM and the RAM in the control unit 322. The replay-position management table is updated timely according to operation of a replay key 403.

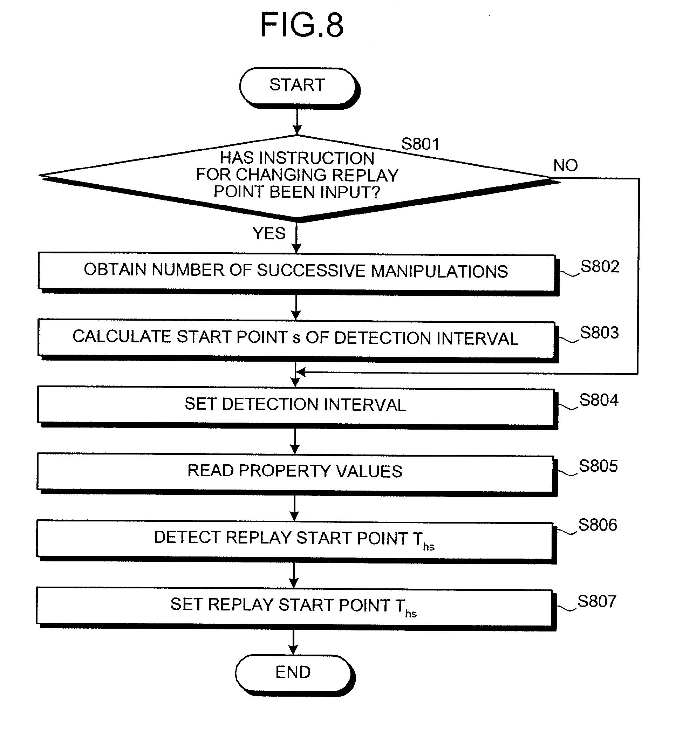

Although not shown, a buffer to set a detection interval used for start-point detection processing explained hereinafter (see Fig. 8) is provided in the ROM or the RAM of the control unit 322. The detection interval is an interval within which a point to start replay (hereinafter, "replay start point") is detected. The time period of the detection interval is constant. A start point s and an end point e of the detection interval are set in the buffer. The start point s is set corresponding to a point that precedes a reference point by a number of seconds, the reference point being a current time Tb at a playback point $T_c$. Since the time period of the detection interval is constant, the end point e is automatically set when the start point s is determined.

The operation unit 323 outputs, to the control unit 322, information input by a user operation such as characters, numbers, and various instructions. The operation unit 323 may adopt various known configurations such as a push button switch that detects on and off thereof, a touch panel, a keyboard, and a joystick. The operation unit 323 may be manipulated by speech using a microphone. The operation unit 323 may include one of the above elements or plural elements.

The operation unit 323 may be provided integrally with the recording and playback apparatus or separately therefrom. A user arbitrarily performs an input operation to input data according to the configuration of the operation unit 323. Hereinafter, considering a case in which the operation unit 323 is implemented by a remote controller that can operate separately from the recording and playback apparatus, reference numeral 323 is assigned to the remote controller in the example 1.

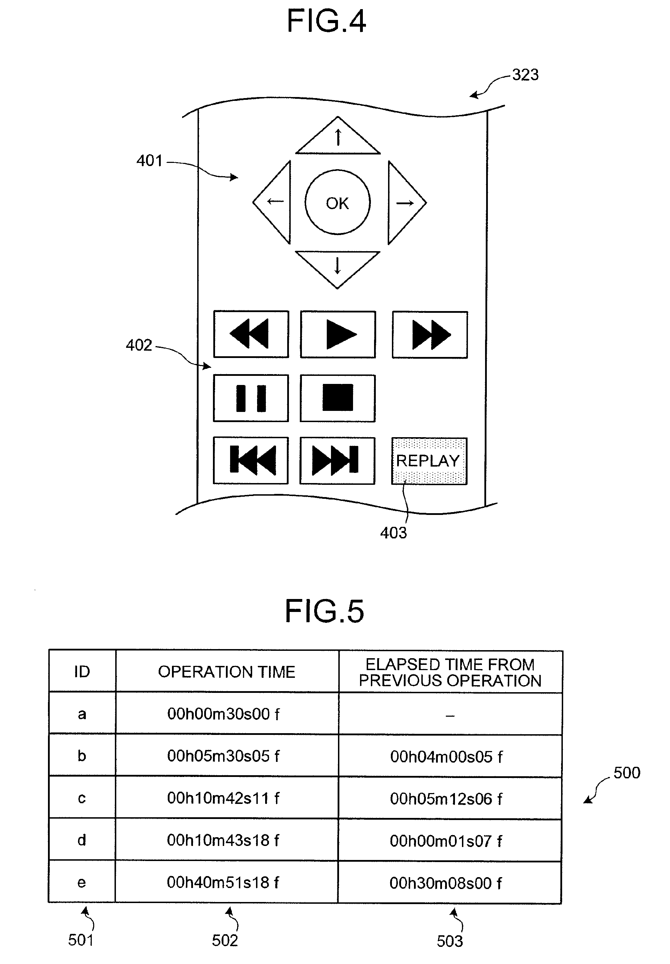

Fig. 4 is a schematic of key arrangement of the remote controller according to the example 1. The remote controller 323 includes a replay key 403 in addition to menu selection keys 401 and playback related keys 402. A replay of the content in play is initiated by manipulating the replay key 403. Replay of the content is explained in detail hereinafter.

The output of a video signal from the image output unit 318 and/or of an audio signal from the audio output unit 321 is called "viewing of a content", hereinafter, and distinguished from normal watching and listening by a user. The content to be viewed may be a content output in real-time from the tuner 302 without passing through the HDD 313, or a content read from the HDD 313.

The menu selection keys 401 operate to move or specify a position of a cursor. The playback related keys 402 are for performing operations relevant to playback such as play, fast forward, and rewind. Although not shown, the remote controller 323 further includes various keys such as a power key, a channel selection key (a numeric keypad and an up-down key), a volume up-down key, a display switch key for switching between one-screen display and two-screen display.

A ring buffer included in the recording and playback apparatus and data stored in the ring buffer will be explained. Fig. 5 is an explanatory diagram of the ring buffer included in the recording and playback apparatus according to the example 1. A ring buffer 500 is provided in the ROM or the RAM of the control unit 322.

As shown in Fig. 5, ID information 501, operation time information 502, and elapsed time information 503 are stored in the ring buffer 500. The operation time information 502 indicates the time of (operation time) manipulation of the replay key 403. The elapsed time information 503 indicates the time elapsed from the previous manipulation of the replay key 403 to the present manipulation of the replay key 403. The ID information 501 identifies a combination of the operation time information 502 and the elapsed time information 503.

Although not particularly shown, a flag area is provided in the HDD 313 and set when the replay key 403 is successively manipulated. The flag is set when the elapsed time corresponding to a newest operation time stored in the ring buffer 500 is less than one second.

A process performed by the recording and playback apparatus is explained. The recording and playback apparatus performs a recording process, a replay process, a start-point detection process, an end-point detection process, and a detection-interval setting process. A case in which the content is a TV program and viewed in real time is explained in the example 1.

(Recording Process)

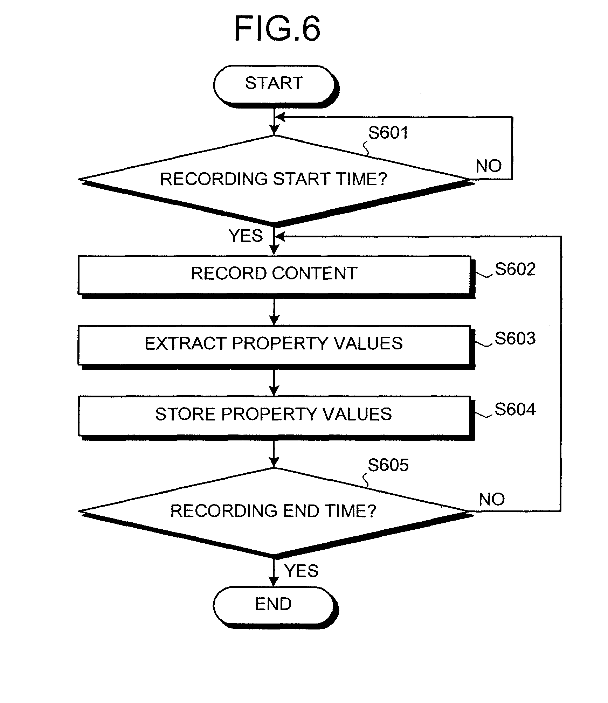

The recording process is explained. Fig. 6 is a flowchart of a recording process according to the example 1. The recording process shown in Fig. 6 is performed when the viewing mode is set to the "normal viewing mode." As shown in Fig. 6, whether the recording start time has come is judged (step S601). At step S601, whether viewing of the content has started is judged.

At step S601, waiting for the recording start time to come occurs (step S601: NO), and when it becomes the recording start time (step S601: YES), recording of the content is commenced (step S602), property values of the content are extracted (step S603), the extracted property values and the positions of the property values are stored in the HDD 313 (step 5604). The positions of the property values are indicated by absolute time (in units of seconds) whereby the start point of the program is set to 0. The unit of the positions of the property values may be a frame or absolute time.

It is judged whether the recording end time has come (step S605). When it is judged that it is not the recording end time (step S605: NO), the process returns to step S602. When it is judged that the recording end time has come (step S605: YES), the process ends. Specifically, by judging at step S605 whether the viewing of the content has ended or the broadcast of the content has ended, it is judged whether the recording end time has come.

Although the case in which the content is the TV program and viewed in real time is explained in the example 1, the content to be viewed is not limited thereto. For example, content that is stored in the HDD 313 and whose property values have been extracted may be targeted.

(Replay Process)

The replay process is explained. As an example, a case in which a user, viewing a baseball game on TV as the content, has missed a homerun scene, and operates the replay key 403 to replay the homerun scene is explained according to the example 1.

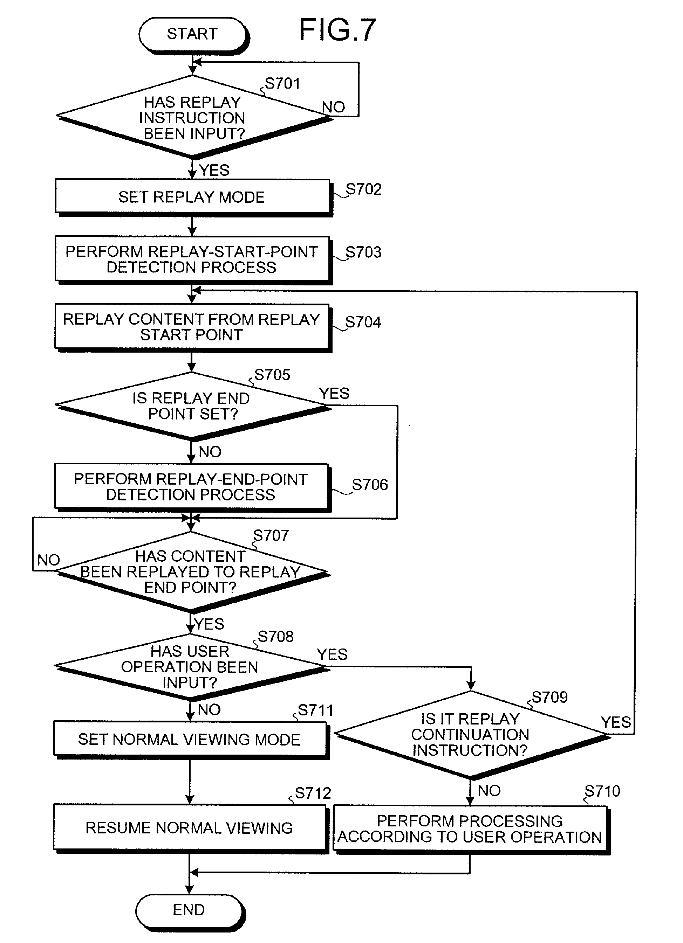

Fig. 7 is a flowchart of the replay process according to the example 1. The replay process shown in Fig. 7 is performed when the viewing mode is set to the "normal viewing mode." As shown in Fig. 7, it is judged whether a replay instruction has been input (step S701). Specifically, it is judged at step S701 whether the replay key 403 is manipulated.

Until the replay instruction is input, waiting occurs at step S701 (step S701: NO) and when the replay instruction is input (step S701: YES), the viewing mode in the replay flag area is set to the replay mode (Replay Flag=True) (step S702). The start-point detection process (see Fig. 8) is performed (step S703), and a point from which the replay starts (hereinafter, "replay start point") is detected. The replay start point is explained in detail hereinafter.

The content recorded by the recording process shown in Fig. 6 is replayed from the replay start point detected at step S703 (step S704), and it is judged whether an end point, the point at which the replay of the content ends (hereinafter, "replay end point") is set (step S705). When the replay end point is set (step S705: YES), the process proceeds to step S707.

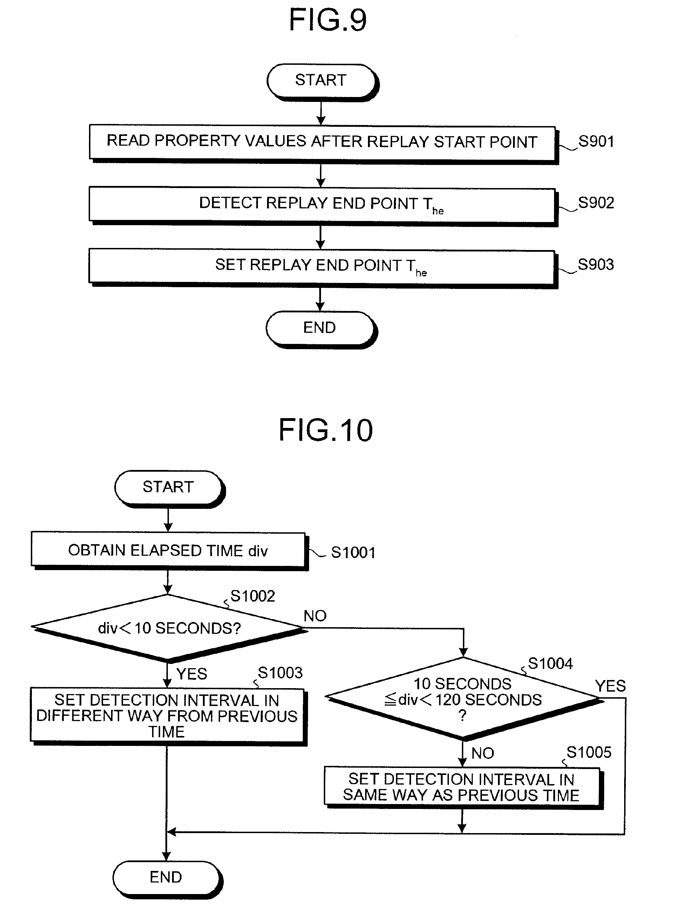

On the other hand, when the replay end point is not set at step S705 (step S705: NO), the end-point detection process (see Fig. 9) is performed (step S706), and the replay end point is detected. The end-point detection process is explained hereinafter.

Waiting occurs until the content is replayed to the replay end point (step S707: NO), and when the content is replayed to the replay end point (step S707: YES), it is judged whether a user operation by the remote controller 323 has been performed during the replaying of the highlight scene from the replay start point to the replay end point (step S708). It is judged at step S708 whether a user operation is performed at any time while the content is being replayed from the replay start point to the replay end point. Specifically, for example, information concerning the time (the relative time or the absolute time explained above) at which a user operation is performed by the remote controller 323 is stored in the RAM of the control unit 322, and referred to when the content is replayed to the replay end point.

In the example 1, when a user wants to repeatedly view the highlight scene in replay, the user operates the replay key 403 during the replay of the highlight scene. When a key other than the replay key 403 is operated, another operation is performed.

When a user operation is performed while the content is replayed from the replay start point to the replay end point (step S708: YES), it is judged whether the user operation is a replay continuation instruction (step S709). Specifically, for example, it is judged at step S709 that the user operation is the replay continuation instruction when the replay key 403 is manipulated while the content is replayed from step S704 to step S707: YES.

When the user operation is the replay continuation instruction (step S709: YES), the process returns to step S704. When the user operation is not the replay continuation instruction (step S709: NO), processing according to the user operation (step S710) is performed, and the process ends. Specifically, for example, at step S710, when the rewind key among the playback related keys is manipulated, the content is rewound, and when the pause key is manipulated, the replay of the content pauses.

On the other hand, when a user operation is not performed while the content is replayed from the replay start point to the replay end point (step S708: NO), the viewing mode is set to the normal viewing mode (step S711). Then, the playback in the normal viewing mode is commenced (step S712), and the process ends.

At step S712, the playback may be started from the point to which the content has been played when the replay mode is set at step S702, or from the current image. Among the normal viewing processes above, an optimal process may be automatically selected or selected by a user.

Although the case in which a user wants to repeatedly view the highlight scene is explained, with reference to Fig. 7, in which the replay key 403 is manipulated, the following two cases are primarily considered as a case in which a user operates the replay key 403 in the normal viewing mode while the content is not being replayed. One is a case in which the user has missed the important scene due to inattention. The second is a case in which the user wants to view the highlight scene again. Thus, two points from which the replay is to be started are primarily considered.

In the former case, since the highlight scene required by the user is considered to be located immediately before the replay key 403 is manipulated, the highlight scene may be detected within an interval of a few seconds to tens of seconds before the replay key 403 is operated, for example. In the latter case, since the highlight scene required by the user is considered to be located a bit before the replay key 403 is manipulated, the highlight scene may be detected within an interval of 30 to 120 seconds before the replay key 403 is manipulated, for example.

The example 1 is based on the case in which the replay key 403 is manipulated one time when the highlight scene to be replayed is immediately before the current scene in play, and the case in which the replay key 403 is manipulated plural times when the highlight scene to be replayed is a bit before the current scene. As a result, the replay start point can be detected from any point required by a user. The start-point detection process at step S703 shown in Fig. 7 is explained below.

(Start-point Detection Process)

Fig. 8 is a flowchart of the start-point detection process according to the example 1. As shown in the flowchart in Fig. 8, it is judged whether an instruction for changing the replay point has been input (step S801). Specifically, it is judged at step S801 whether the replay key 403 is successively manipulated, which is judged by judging whether the flag in the flag area is present. A process in a case in which the instruction for changing the replay point is input is explained hereinafter.

When the instruction for changing the replay point is not received at step S801 (step S801: NO), the process proceeds to step S804 and the detection-interval setting process is performed, and the detection interval is set (step S804). Specifically, at step S804, a start point s is set to the point preceding the current playback point $T_c$ by 120 seconds, and an end point e is set to the point preceding the current playback point $T_c$ by one second. Therefore, the time period of the detection interval is 119 (120-1) seconds.

On the other hand, when the instruction for changing the replay point is received at step S801 (step S801: YES), the number of successive manipulations is obtained with reference to the ring buffer 500 (step S802), a start point s of the detection interval is calculated using the obtained number of successive manipulations (step S803). At step S803, the start point s of the detection interval is set to a point preceding the current playback point $T_c$ by more than 120 seconds.

Specifically, for example, when the number of successive manipulations is two, the start point s of the detection interval is set to the point preceding the current playback point $T_c$ by 240 seconds (120 seconds×2 times). When the number of successive manipulations is three, the start point s of the detection interval is set to the point preceding the current playback point $T_c$ by 360 seconds (120 seconds×3 times). Although the start point s of the detection interval is set to a point preceding the current playback point by 120-second intervals according to the number of successive manipulations of the replay key 403 in the example 1, the preceding period is not limited to 120 seconds.

At step S804 when the instruction for changing the replay point is input, the start point s calculated at step S803 is set, and an end point e is set to a point 119 seconds after the start point s.

The property values of the content within the detection interval set at step S804 are read from the HDD 313 (step S805), a replay start point is detected based on the read property values (step S806). Specifically, at step S806, for example, a point at which a property value of the content is equal to or more than a threshold is detected within the detection interval as the replay start point. The threshold used for detecting the replay start point can be arbitrarily set when the recording and playback apparatus is manufactured, for example. Furthermore, plural thresholds can be set according to stages.

When a point at which a property value that changes by an amount equal to or more than a threshold is not detected within the detection interval, for example, a point at which the change in the property value is largest within the detection interval may be detected as the replay start point. The detected replay start point $T_{hs}$ is set to the replay-point management table (step 5807).

(End-point Detection Process)

The end-point detection process is explained. Fig. 9 is a flowchart of the end-point detection process according to the example 1. As shown in the flowchart in Fig. 9, the property values after the replay start point are read from the HDD 313 (step S901), the replay end point $T_{he}$ is detected based on the read property values (step S902), and the replay end point $T_{he}$ is set in the replay-point management table (step S903).

Specifically, for example, at step S902, a point is detected at which the property value of the content after the replay start point $T_{hs}$ becomes smaller than another threshold different from the threshold used for detecting the replay start point. When the recording and playback apparatus is manufactured, for example, the other threshold can be arbitrarily set independently from the threshold used for detecting the replay start point. When plural thresholds are respectively set for detecting the replay start point according to stages, plural thresholds for detecting the replay end point can be set respectively according to the stages.

The content from the replay start point $T_{hs}$ set at step S807 to the replay end point $T_{he}$ set at step S903 becomes the highlight scene in the example 1. Plural highlight scenes may be overlapped due to some detection conditions of the replay start points and the replay end points such as when plural thresholds used for detecting the replay start point and plural other thresholds used for detecting replay end point are set.

From when the replay start point $T_{hs}$ is set by the start-point detection process shown in Fig. 8 to when the replay end point $T_{he}$ is set by the replay-end point detection process, the end point $T_{he}$ in the replay-point management table is set to -1 ($T_{he}$=-1). In other words, the process shown in Fig. 9 is performed when the end point $T_{he}$=-1.

Although it is explained in the example 1 that the detection interval is set according to the number of times for which the replay key 403 is successively manipulated, configuration is not limited thereto. For example, in addition to the number of times the replay key 403 is successively manipulated, the detection interval may be set according to a time period (continuous operation time-period) for which the replay key 403 is continuously manipulated, such as a case in which the replay key 403 is held down.

Although not shown, in this case, specifically, for example, a buffer may be provided to store the time at which the replay key 403 is held down and the time at which the replay key 403 is released, and by referring to the buffer, the continuous operation time-period may be obtained to set the detection interval by multiplying the obtained continuous operation time-period by a time period such as 120 seconds.

The following two patterns may be primarily considered as the motivation of a user to manipulate the replay key 403. One is a case in which the previously detected highlight scene is not the one intended by the user, the user operates the replay key 403 to correct the replay point. Another is a case in which the user operates the replay key 403 to view the detected highlight scene again.

With consideration of the above cases, in the example 1, the user-intended replay operation can be performed when the replay key 403 is operated based on the elapsed time from when the replay key 403 is previously manipulated to when the replay key 403 is currently manipulated. In this case, specifically, the following detection-interval setting process is performed.

(Detection-interval Setting Process)

Fig. 10 is a flowchart of the detection-interval setting process according to the example 1. As shown in the flowchart in Fig. 10, an elapsed time div from a time Tb_bak at which the replay key 403 is previously manipulated to a time Tb at which the replay key 403 is currently manipulated (step S1001). Specifically, the elapsed time div is calculated based on div=Tb-Tb_bak at step S1001.

It is judged whether the elapsed time div obtained at step S1001 is less than 10 seconds (the elapsed time div<10 seconds) (step S1002). When the elapsed time div obtained at step S1001 is less than 10 seconds (step S1002: YES), the detection interval is set in a different way from that in which the previously-set detection interval is set (step S1003).

In other words, when the elapsed time div is less than 10 seconds, it is necessary to correct the replay point since it is assumed that the user is not satisfied with the previously replayed highlight-scene and has manipulated the replay key 403 again. In this case, the start point s of the detection interval is set to precede the start point s of the previously set detection interval. Specifically, it is set at step S1003 that the start point s=$T_{hs}$-180 seconds, the end point e=$T_{hs}$-30 seconds.

In contrast, when the elapsed time div is not shorter than 10 seconds (step S1002: NO), it is judged whether the elapsed time div is equal to or longer than 10 seconds and shorter than 120 seconds (10 seconds≤elapsed time div<120 seconds) (step S1004). When the elapsed time div is equal to or longer than 10 seconds and shorter than 120 seconds (step S1004: YES), the process ends.

In other words, since the elapsed time div that is equal to or longer than 10 seconds and shorter than 120 seconds is enough time within which the highlight scene can be played back once, it is guessed that the users want to view the previously-detected highlight scene again and the same scene should be replayed. Although a specific illustration is omitted, specifically, when the elapsed time div is equal to or longer than 10 seconds and shorter than 120 seconds, the start point s and the end point e of the detection interval are set to 0 (start point s=end point e=0). In this case, since the detection interval becomes 0, a new highlight scene is not detected, and previous highlight scene is played back.

When the elapsed time div is not equal to or longer than 10 seconds and shorter than 120 seconds (step S1004: NO), it is judged that the elapsed time div is equal to or more than 120 seconds, and the detection interval is set in the same way as that in which the previous detection interval is set (step S1005). In other words, when the elapsed time is equal to or more than 120 seconds, since it is natural to guess that a new replay request is input, the normal replay motion is performed.

Although the detection interval is set according to the elapsed time div in the example 1, it is not limited thereto. For example, the detection interval may be set by a specific key provided to set the detection interval and by judging that the specific key has been manipulated. Furthermore, the detection interval is not limited to an interval before the replay key 403 is operated, but may be an interval after the time the replay key 403 is manipulated.

The detection interval may be set by the following method in the example 1. Specifically, for example, the playback related keys 402 in the remote controller 323 shown in Fig. 4 are used as a key to set the detection interval. In this case, using the playback related keys 402 as the key to set the detection interval is limited to the case in which the playback related keys 402 are manipulated while the content is being viewed.

Specifically, for example, a chapter-forward skip key (shown left of the replay key 403 in Fig. 4) is used correct the replay point in the future direction after the replay key 403 is manipulated. A chapter-backward skip key (shown right of the chapter-forward skip key in Fig. 4) is used to correct the replay point in the past direction before the replay key 403 was manipulated. Hereinafter, a function to retrieve the replay point in the past direction or the future direction is called a highlight scan.

The detection interval may be set using only the replay key 403 according to a combination of the elapsed time div and the number of times the replay key 403 is manipulated. Specifically, for example, when the elapsed time div is equal to or more than 10 seconds, and the number of manipulations is 1 time, the detection interval is set in the past direction. When the elapsed time div is less than 10 seconds, and the number of manipulations is 2 times, the detection interval is set in the future direction. According to this method, the detection interval can be set using only the replay key 403.

The key used for the highlight scan is not limited to above keys. For example, the keys to move a cursor right and left or other keys among the menu selection keys 401 may be used. A key that is intuitively comprehensible for a user may be used.

As explained above, according to the example 1, a user can replay, by simply manipulating the replay key 403 with any timing, a highlight scene according to the operation time of the replay key 403, resulting in simplicity of the operation when replaying a highlight scene and optimization of the replay start point. Furthermore, according to the example 1, the replay can be performed at any time intended by a user.

Furthermore, according to the example 1, by storing property values of the content, various operations for replay such as adjusting of the detection interval of a highlight scene, detection accuracy (level), and setting a tradeoff between the detection accuracy and the processing time of the detection are enabled. Specifically, for example, the detection accuracy (level) can be adjusted so that only the highlight scene of which the property value is equal to or more than a threshold can be extracted.

Specifically, for example, when viewing the recorded content, since the property values have been extracted, playback of only the highlight scenes is possible, and the highlight scenes can be sorted according to the property values to perform digest playback within a predetermined period of time.

Furthermore, according to the example 1, the detection interval can be set according to the number of successive manipulations of the replay key 403, increasing flexibility in setting the detection interval, enabling flexible response to the user intended timing with a simple operation, and replay of a highlight scene closer to the user request. Similarly, when the start point s of the detection interval is set according to the continuous operation time-period of the replay key 403, a highlight scene that is flexibly matched with the user request can be replayed.

[Example 2]

An example 2 of the recording and playback apparatus according to the embodiment explained above is explained. Like reference numerals represent like elements, and explanation thereof is omitted.

(Hardware Configuration of Recording and playback apparatus)

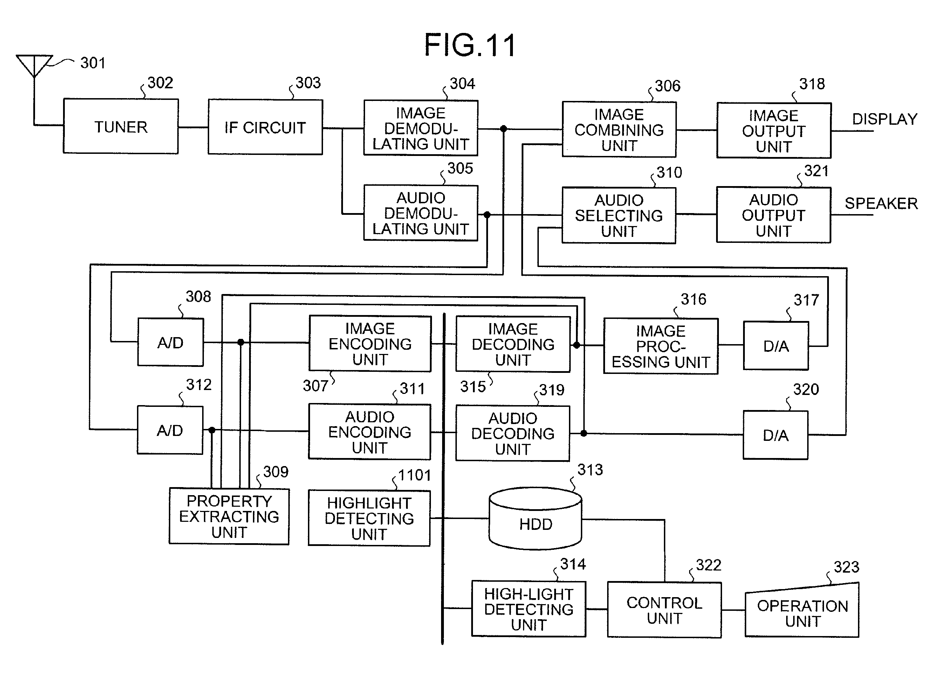

Fig. 11 is a block diagram of a hardware configuration of a recording and playback apparatus according to the example 2. The difference between the recording and playback apparatuses shown in Figs. 3 and 11 is only a position and a function of a highlight detecting unit.

The highlight detecting unit 1101 detects a highlight scene from among the images of the content based on the property values extracted by the property extracting unit 309, and calculates a priority of the detected highlight scene. Specifically, for example, the priority is indicated by an integer from 0 to 100 where 0 and 100 indicate the lowest and the highest priorities, respectively. The way of indicating the priority is not limited thereto. Similar to the example 1, a specific method of detecting a highlight scene is not specifically limited in the example 2.

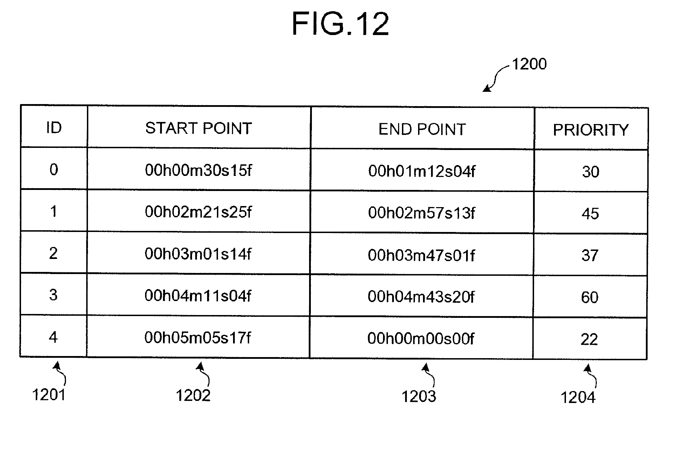

A database included in the recording and playback apparatus according to the example 2 and data stored therein is explained. Fig. 12 is an explanatory diagram of the database included in the recording and playback apparatus according to the example 2. A database 1200 is provided in the HDD 313, for example.

As shown in Fig. 12, a database 1200 stores therein ID information 1201, start point information 1202, end point information 1203, and priority information 1204. The start point information 1202 indicates a start point of the highlight scene detected by the highlight detecting unit 1101. The priority information 1204 indicates a priority of the highlight scene from the start point to the end point. The ID information 1201 identifies each highlight scene.

The end point of the highlight scene corresponding to ID=4 indicates 00h00m00s00f. This is because the highlight scene corresponding to ID=4 is currently being broadcasted on TV, and an end point thereof has not been defined. A provisional priority calculated based on the property value at the highlight start point is set to a priority of the highlight scene of which an end point is undefined.

When an end point of the highlight scene to which the provisional priority is set becomes defined during the TV broadcast, the correct end point is set. At the same time of setting the correct end point, a priority of the highlight scene is calculated again based on the property values of the overall highlight scene. The provisional priority is updated as required based on a result of the calculation.

A process performed by the recording and playback apparatus is explained. Illustration and explanation of the process in the example 2 similar to that in the example 1 are omitted, and only the process characterizing the example 2 will be explained.

(Recording Process)

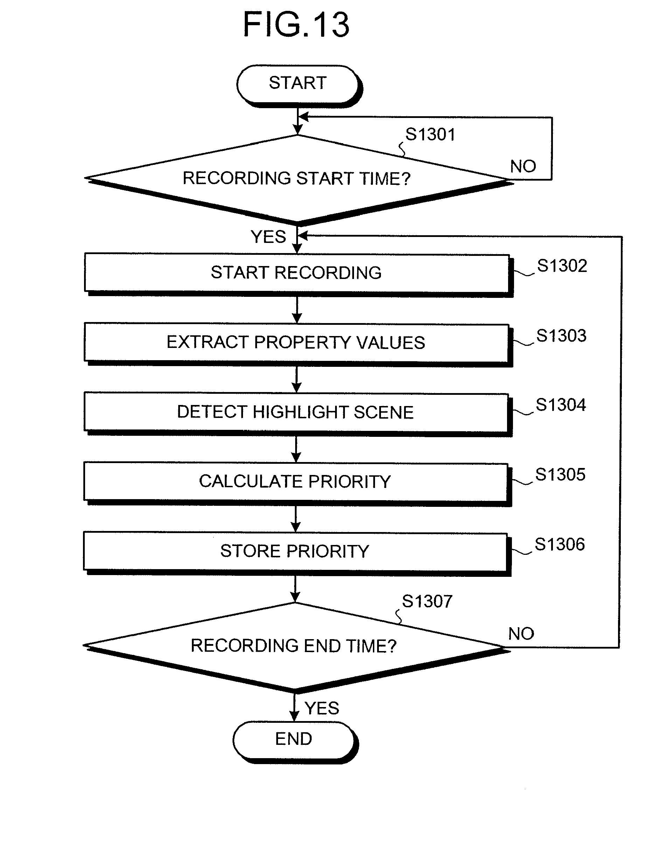

A recording process is explained. Fig. 13 is a flowchart of a recording process according to the example 2. As shown in Fig. 13, a recording start time is waited for (step S1301: NO), and when it becomes the recording start time (step S1301: YES), the recording of the viewed content starts (step S1302), and property values of the content are extracted (step S1303).

A highlight scene is detected based on the property values extracted at step S1303 (step S1304). At step S1304, a start point and an end point of the highlight scene are detected based on the property values extracted at step S1303. The start point of the highlight scene can be detected by a similar process as the start-point detection process shown in Fig. 8. The end point of the highlight scene can be detected in a similar process as the end-point detection process shown in Fig. 9.

A priority of the highlight scene is calculated (step S1305), and the calculated priority and the point thereof are stored in the database 1200 (step S1306). At step S1305, a priority is calculated for each highlight scene based on the property values extracted at step S1303.

When the highlight scenes overlap, the priority is set to each of the highlight scene based on the threshold for detecting the replay start point and the other threshold for detecting the replay end point such that a higher priority is set to the highlight scene to which a higher detection condition is set. Further, the priority is calculated based on the property values of the overall highlight scene such as the audio volume or the length of the highlight scene. The priority position is indicated by the relative time (in units of seconds) where the start point of the program is set to 0. Further, the unit of the priority position may be a frame or an absolute time.

It is judged whether it is the recording end time (step S1307). When it is judged that it is not the recording end time (step S1307: NO), the process returns to step S1302. When it is judged that it is the recording end time (step S1307: YES), the process ends.

(Replay Process)

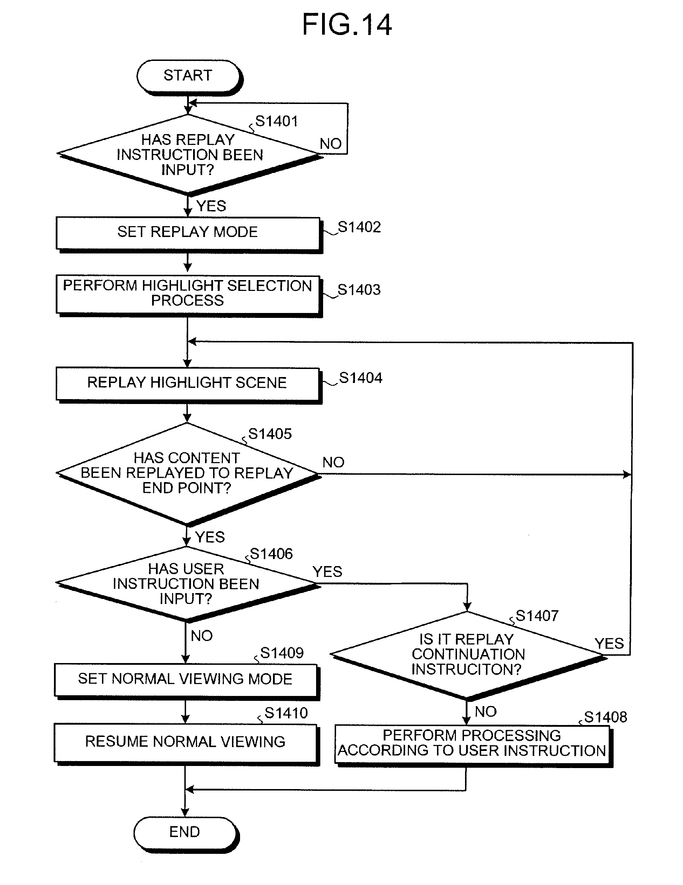

A replay process will be explained. Fig. 14 is a flowchart of a replay process according to the example 2. The replay process shown in Fig. 14 is performed when the viewing mode is set to the "normal viewing mode." As shown in Fig. 14, a replay instruction is waited for (step S1401: NO), and when the replay instruction is input (step S1401: YES), a replay mode is set (step S1402).

A highlight selection process explained hereinafter is performed (step S1403), and the content is replayed from the start point of the selected highlight scene (step S1404). Specifically, at step S1403, a scene having the highest priority among the scenes within the predetermined time interval (hereinafter, "detection interval") before the replay key was manipulated is detected as the highlight scene.

When the content has not been replayed to the replay end point (step S1405: NO), the process returns to step S1404. When the content has been replayed to the replay end point (step S1405: YES), it is judged whether the user has operated the remote controller 323 during the replaying of the detected highlight scene (step S1406). It is judged at step S1406 whether the user instruction is input at any time from the replay start point to the replay end point.

When it is judged at step S1406 that the user instruction is input during the replay of the highlight scene (step S1406: YES), it is judged whether the user operation is the replay continuation instruction (step 51407).

When the user instruction is the replay continuation instruction (step S1407: YES), the process returns to step S1404. When the user instruction is not the replay continuation instruction (step S1407: NO), processing according to the user instruction is performed, and the process ends.

On the other hand, when it is judged at step S1406 that the user instruction has not been input during the replay of the highlight scene (step S1406: NO), the viewing mode is set to the normal viewing mode (step S1409), and normal viewing resumes (step S1410).

In the example 2, a highlight can be detected with the following method in addition to the method above in which a replay start point and a replay end point are detected, and a scene from the replay start point to the replay end point is regarded as a highlight scene. When a highlight scene is detected with the following method, it is assumed that a user manipulates the replay key one or two times to change the replay point. Specifically, the user manipulates the replay key one time when replaying the highlight scene that has been played immediately before, and manipulates the replay key twice when replaying the highlight scene that has been played a bit before.

(Highlight Section Process)

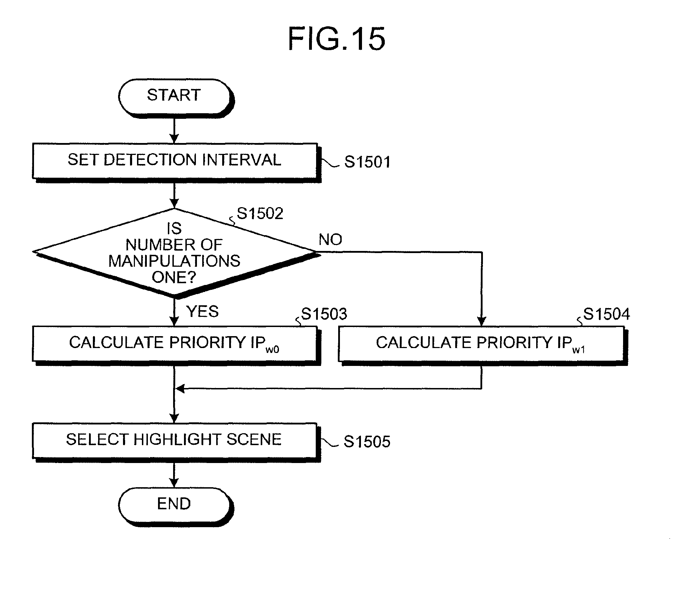

Fig. 15 is a flowchart of a highlight selection process according to the example 2. As shown in Fig. 15, a detection interval is set (step S1501), and it is judged whether the number of manipulations of the replay key is one (step S1502). At step S1501, the detection interval is detected in a similar manner as step S804 in Fig. 8 or the detection setting process shown in Fig. 10.

When it is judged at step S1502 that the number of manipulations of the replay key is one (step S1502: YES), the priority $IP_{W0}$ is calculated (step S1503). When it is judged at step S1502 that the number of manipulations of the replay key is two (step S1502: NO), the priority $IP_{w1}$ is calculated (step 51504).

A method of calculating the priorities $IP_{w0}$ and $IP_{w1}$ is explained. The priority $IP_{w0}$ is calculated by equation (1) below.

[Equation 1]

$$IP_{w0} = \frac{1}{1 + k_1 \cdot (T_c - T_{hs})} \times IP \quad (k_1 \text{ is a coefficient}) \tag{1}$$

Where, $T_c$=current time, $T_{hs}$=highlight start time, and IP=priority. According to equation (1), when $T_c=T_{hs}$, $IP_{w0}$ becomes the maximum value $IP_{w0}=IP$. The larger the time difference between $T_c$ and $T_{hs}$ becomes, the more a value of $IP_{w0}$ decreases. In other words, the highlight scene closest to the operation time of the replay key is extracted preferentially.

The priority $IP_{w1}$ is calculated based on equation (2) below.

[Equation 2]

$$IP_{w1} = \left\{ 1 - \frac{1}{1 + k_2 \cdot (T_c - T_{hs})} \right\} \times IP \quad (k_2 \text{ is a coefficient}) \tag{2}$$

According to equation (2), when $T_c=T_{hs}$, $IP_{w1}$ becomes the minimum value $IP_{w1}=0$. The larger the time difference between $T_c$ and $T_{hs}$, the more a value of $IP_{w1}$ increases. In other words, the highlight scene farthest from the operation time of the replay key is detected preferentially.

The highlight scene having the highest priority within the detection interval set at step S1501 is selected based on the calculated priorities $IP_{w0}$ and $IP_{w1}$ (step S1505).

As explained above, according to the example 2, in addition to the effect of the example 1 explained above, a scene most suitable for the highlight scene can be replayed by calculating a priority of each highlight scene. In other words, simplicity of operation for replaying a highlight scene and further optimization of a replay start point can be achieved. Further, according to the example 2, the amount of data can be reduced by storing the priority of each highlight scene compared with the case of storing the property values.

Further, when replaying a digest of the content, a highlight scene to be detected can be extracted according to the priority thereof. Specifically, for example, a user is caused to set the replay time, and highlight scenes to be detected as the digest are extracted such that the replaying of the highlight scenes is completed within the set replay time. In this case, the longer the set replay is, more highlight scenes can be replayed. When the set replay time is short, only higher priority highlight scenes are extracted.

Further, according to the example 2, since a priority of each highlight scene is calculated according to an elapsed time from the previous manipulation of the replay key, and a highlight scene to be replayed is detected, the user request can be predicted more precisely, and optimal replay can be performed according to the prediction.

The content replay method and content playback method explained in the present embodiment can be implemented by a computer such as a personal computer and a workstation executing a program that is prepared in advance. This program is recorded on a computer-readable recording medium such as a hard disk, a flexible disk, a CD-ROM, an MO, and a DVD, and is executed by being read out from the recording medium by a computer. This program can be a transmission medium that can be distributed through a network such as the Internet.

## Claims

1. A content replay apparatus comprising:

   an obtaining unit that obtains a content to be played;
   a property extracting unit that extracts property values of the content;
   a detecting unit that detects, when a replay instruction is input, a start point of a specific scene of the content, the start point having a property value that is equal to or more than a threshold and closest to an input time of the replay instruction; and
   an output unit that outputs the content from the start point.

2. A content replay apparatus comprising:

   an obtaining unit that obtains a content to be played;
   a property extracting unit that extracts property values of the content;
   a detecting unit that detects, when a replay instruction is input, a start point of a specific scene of the content within a detection interval that is of a predetermined time period and immediately precedes a point corresponding to an input time of the replay instruction, the start point having a property value equal to or more than a threshold; and
   an output unit that outputs the content from the start point.

3. The content replay apparatus according to claim 2, wherein
   the detecting unit detects, in the content subsequent to the start point, an end point of the specific scene having a property value less than another threshold different from the threshold, and
   the output unit outputs the content to the end point.

4. The content replay apparatus according to claim 2, further comprising
   a priority calculating unit that respectively calculates priorities for the property values based on the property values extracted by the extracting unit, wherein
   the detecting unit detects the start point having a highest priority within the detection interval.

5. The content replay apparatus according to claim 2, wherein the detecting unit detects the start point that is closest to the input time.

6. The content replay apparatus according to any one of claims 2 to 5, wherein the detecting unit changes, corresponding to an input pattern of the replay instruction, the detection interval or a length of the detection interval.

7. A content playback apparatus comprising:

an obtaining unit that obtains a content to be played;
a reading unit that reads the content obtained by the obtaining unit;
a property extracting unit that extracts property values of the content read by the reading unit;
a detecting unit that detects, when a replay instruction is input, a start point of a specific scene of the content, the start point having a property value equal to or more than a threshold and closest to an input time of the replay instruction; and
an output unit that sequentially outputs the content read by the reading unit, and if the detecting unit detects the start point, outputs the content from the start point.

8. A content replay method comprising:

an obtaining step of obtaining a content to be played;
a property extracting step of extracting property values of the content;
a detecting step of detecting, when a replay instruction is input, a start point of a specific scene of the content, the start point having a property value that is equal to or more than a threshold and closest to an input time of the replay instruction; and
an output step of outputting the content from the start point.

9. A content replay method comprising:

an obtaining step of obtaining a content to be played;
a property extracting step of extracting property values of the content;
a detecting step of detecting, when a replay instruction is input, a start point of a specific scene of the content within a detection interval that is of a predetermined time period and immediately precedes a point corresponding to an input time of the replay instruction, the start point having a property value equal to or more than a threshold; and
an output step of outputting the content from the start point.

10. A content playback method comprising:

an obtaining step of obtaining a content to be played;
a reading step of reading the content obtained at the obtaining step;
a property extracting step of extracting property values of the content read at the reading step;
a detecting step of detecting, when a replay instruction is input, a start point of a specific scene of the content, the start point having a property value equal to or more than a threshold and closest to an input time of the replay instruction; and
an output step of sequentially outputting the content read at the reading step, and if the start point is detected at the detecting step, outputting the content from the start point.

11. A program causing a computer to execute the method according to any one of claims 8 to 10.

12. A recording medium storing therein the program according to claim 11.

EP 1 924 092 A1

# FIG.1

# FIG.2

```
                    ( START )
                        │
                        ▼
                   ┌─────────┐  S201
              ┌────┤ PLAYBACK INSTRUCTION IS ├──── NO
              │    │ RECEIVED?               │
              │    └─────────┘
              │        │ YES
              │        ▼
              │   ┌──────────────────────┐  S202
              │   │ OBTAIN CONTENT        │
              │   └──────────────────────┘
              │        │
              │        ▼
              │   ┌──────────────────────┐  S203
              │   │ EXTRACT PROPERTY VALUES │
              │   └──────────────────────┘
              │        │
              │        ▼
              │   ┌──────────────────────┐  S204
              │   │ CALCULATE PRIORITY    │
              │   └──────────────────────┘
              │        │
              │        ▼
              │   ┌──────────────────────┐  S205
              │   │ STORE PRIORITY        │
              │   └──────────────────────┘
              │        │
              │        ▼
              │   ┌──────────────────────┐  S206
              │   │ PLAY BACK CONTENT     │
              │   └──────────────────────┘
              │        │
              │        ▼  S207
              │    REPLAY INSTRUCTION IS ──── NO
              │    RECEIVED?
              │        │ YES
              │        ▼
              │   ┌──────────────────────┐  S208
              │   │ DETECT HIGHLIGHT SCENE │
              │   └──────────────────────┘
              │        │
              │        ▼
              │   ┌──────────────────────┐  S209
              │   │ REPLAY HIGHLIGHT SCENE │
              │   └──────────────────────┘
              │        │
              │        ▼  S210
              │    REPLAY HAS BEEN ──── NO
              │    COMPLETED?
              │        │ YES
              │        ▼  S211
              │    PLAYBACK OF CONTENT ──── NO
              │    HAS BEEN COMPLETED?
              │        │ YES
              │        ▼
              │      ( END )
```

S201 PLAYBACK INSTRUCTION IS RECEIVED? — NO / YES

S202 OBTAIN CONTENT

S203 EXTRACT PROPERTY VALUES

S204 CALCULATE PRIORITY

S205 STORE PRIORITY

S206 PLAY BACK CONTENT

S207 REPLAY INSTRUCTION IS RECEIVED? — NO / YES

S208 DETECT HIGHLIGHT SCENE

S209 REPLAY HIGHLIGHT SCENE

S210 REPLAY HAS BEEN COMPLETED? — NO / YES

S211 PLAYBACK OF CONTENT HAS BEEN COMPLETED? — NO / YES

FIG.3

# FIG.4

# FIG.5

| ID | OPERATION TIME | ELAPSED TIME FROM PREVIOUS OPERATION |
|----|----------------|--------------------------------------|
| a | 00h00m30s00 f | – |
| b | 00h05m30s05 f | 00h04m00s05 f |
| c | 00h10m42s11 f | 00h05m12s06 f |
| d | 00h10m43s18 f | 00h00m01s07 f |
| e | 00h40m51s18 f | 00h30m08s00 f |

501    502    503

# FIG.6

```
           ┌──────────┐
           │  START   │
           └──────────┘
                │
                ▼            S601
        ╱─────────────────────╲         NO
       ╱  RECORDING START TIME? ╲────────┐
       ╲                        ╱         │
        ╲──────────────────────╱          │
                │ YES ◄──────────────────┐│
                ▼                        ││
        ┌──────────────────────┐  S602   ││
        │    RECORD CONTENT     │         ││
        └──────────────────────┘         ││
                │                         ││
                ▼                         ││
        ┌──────────────────────┐  S603    ││
        │ EXTRACT PROPERTY VALUES│        ││
        └──────────────────────┘         ││
                │                         ││
                ▼                         ││
        ┌──────────────────────┐  S604    ││
        │ STORE PROPERTY VALUES │         ││
        └──────────────────────┘         ││
                │             S605        ││
                ▼                         ││
        ╱─────────────────────╲    NO     ││
       ╱  RECORDING END TIME?   ╲─────────┘│
       ╲                        ╱          │
        ╲──────────────────────╱           │
                │ YES                       │
                ▼                           │
           ┌──────────┐                     │
           │   END    │                     │
           └──────────┘                     │
```

# FIG.7

START

S701
HAS REPLAY
INSTRUCTION
BEEN INPUT? — NO

↓ YES

SET REPLAY MODE — S702

PERFORM REPLAY-START-POINT
DETECTION PROCESS — S703

REPLAY CONTENT FROM REPLAY
START POINT — S704

S705
IS REPLAY END
POINT SET? — YES

↓ NO

PERFORM REPLAY-END-POINT
DETECTION PROCESS — S706

S707
NO — HAS CONTENT
BEEN REPLAYED TO REPLAY
END POINT?

↓ YES

S708
HAS USER
OPERATION BEEN
INPUT? — YES

↓ NO — S711

SET NORMAL VIEWING MODE

S709
IS IT REPLAY
CONTINUATION
INSTRUCTION? — YES

↓ NO — S710

RESUME NORMAL VIEWING — S712

PERFORM PROCESSING
ACCORDING TO USER OPERATION

END

# FIG.8

START

$$\downarrow$$

HAS INSTRUCTION FOR CHANGING REPLAY POINT BEEN INPUT? — S801 — NO

YES

$$\downarrow$$

OBTAIN NUMBER OF SUCCESSIVE MANIPULATIONS — S802

$$\downarrow$$

CALCULATE START POINT s OF DETECTION INTERVAL — S803

$$\downarrow$$

SET DETECTION INTERVAL — S804

$$\downarrow$$

READ PROPERTY VALUES — S805

$$\downarrow$$

DETECT REPLAY START POINT $T_{hs}$ — S806

$$\downarrow$$

SET REPLAY START POINT $T_{hs}$ — S807

$$\downarrow$$

END

# FIG.9

START

READ PROPERTY VALUES AFTER REPLAY START POINT ⎯ S901

DETECT REPLAY END POINT $T_{he}$ ⎯ S902

SET REPLAY END POINT $T_{he}$ ⎯ S903

END

# FIG.10

START

OBTAIN ELAPSED TIME div ⎯ S1001

S1002

$div < 10$ SECONDS? — NO

YES — S1003

SET DETECTION INTERVAL IN DIFFERENT WAY FROM PREVIOUS TIME

S1004

10 SECONDS $\leq div < 120$ SECONDS ? — YES

NO — S1005

SET DETECTION INTERVAL IN SAME WAY AS PREVIOUS TIME

END

# FIG.11

TUNER — 302

IF CIRCUIT — 303

IMAGE DEMODU-LATING UNIT — 304

AUDIO DEMODU-LATING UNIT — 305

IMAGE COMBINING UNIT — 306

IMAGE OUTPUT UNIT — 318 → DISPLAY

AUDIO SELECTING UNIT — 310

AUDIO OUTPUT UNIT — 321 → SPEAKER

A/D — 308

IMAGE ENCODING UNIT — 307

IMAGE DECODING UNIT — 315

IMAGE PROC-ESSING UNIT — 316

D/A — 317

A/D — 312

AUDIO ENCODING UNIT — 311

AUDIO DECODING UNIT — 319

D/A — 320

PROPERTY EXTRACTING UNIT — 309

HIGHLIGHT DETECTING UNIT — 1101

HDD — 313

HIGH-LIGHT DETECTING UNIT — 314

CONTROL UNIT — 322

OPERATION UNIT — 323

301

EP 1 924 092 A1

# FIG.12

~1200

| ID | START POINT | END POINT | PRIORITY |
|---|---|---|---|
| 0 | 00h00m30s15f | 00h01m12s04f | 30 |
| 1 | 00h02m21s25f | 00h02m57s13f | 45 |
| 2 | 00h03m01s14f | 00h03m47s01f | 37 |
| 3 | 00h04m11s04f | 00h04m43s20f | 60 |
| 4 | 00h05m05s17f | 00h00m00s00f | 22 |

1201          1202                    1203            1204

# FIG.13

```
        START
          │
          ▼
     ◇ S1301              NO
  RECORDING START TIME? ──────┐
          │ YES ◄─────────────┼──┐
          ▼                   │  │
  START RECORDING ── S1302    │  │
          │                   │  │
          ▼                   │  │
  EXTRACT PROPERTY VALUES ── S1303
          │                   │  │
          ▼                   │  │
  DETECT HIGHLIGHT SCENE ── S1304
          │                   │  │
          ▼                   │  │
  CALCULATE PRIORITY ── S1305 │  │
          │                   │  │
          ▼                   │  │
  STORE PRIORITY ── S1306     │  │
          │                   │  │
          ▼                   │  │
     ◇ S1307              NO  │  │
  RECORDING END TIME? ────────┘
          │ YES
          ▼
        END
```

# FIG.14

```
                    ┌─────────┐
                    │  START  │
                    └────┬────┘
                         │←──────────────────────────────┐
                         ▼          S1401                 │
                    ╱────────────╲                        │
                   ╱ HAS REPLAY   ╲      NO               │
                  ╱ INSTRUCTION BEEN╲─────────────────────┘
                   ╲   INPUT?      ╱
                    ╲────────────╱
                         │ YES
                         ▼
              ┌─────────────────────┐  S1402
              │   SET REPLAY MODE   │
              └──────────┬──────────┘
                         ▼
              ┌─────────────────────┐  S1403
              │PERFORM HIGHLIGHT     │
              │SELECTION PROCESS     │
              └──────────┬──────────┘
                         ▼ ←────────────────────────────────────┐
              ┌─────────────────────┐  S1404                     │
              │ REPLAY HIGHLIGHT     │                           │
              │ SCENE               │                           │
              └──────────┬──────────┘                           │
                         ▼          S1405                        │
                    ╱────────────╲                               │
                   ╱ HAS CONTENT  ╲     NO                       │
                  ╱ BEEN REPLAYED  ╲──────────────────────────────┘
                  ╲ TO REPLAY      ╱
                   ╲ END POINT?   ╱
                    ╲────────────╱
                         │ YES
                         ▼          S1406
                    ╱────────────╲        YES
                   ╱ HAS USER     ╲───────────────┐
                  ╱ INSTRUCTION    ╲               │
                   ╲ BEEN INPUT?  ╱                │
                    ╲────────────╱                 ▼          S1407
                         │ NO                 ╱────────────╲
                         ▼       S1409       ╱ IS IT REPLAY ╲   YES
              ┌─────────────────────┐       ╱ CONTINUATION   ╲──────┐
              │ SET NORMAL VIEWING  │        ╲ INSTRUCITON?  ╱       │
              │ MODE                │         ╲────────────╱         │
              └──────────┬──────────┘              │ NO              │
                         ▼       S1410             ▼      S1408      │
              ┌─────────────────────┐   ┌─────────────────────────┐ │
              │ RESUME NORMAL       │   │ PERFORM PROCESSING      │ │
              │ VIEWING             │   │ ACCORDING TO USER       │ │
              └──────────┬──────────┘   │ INSTRUCTION             │ │
                         │              └───────────┬─────────────┘ │
                         │←───────────────────────────┘             │
                         ▼                                          │
                    ┌─────────┐                                     │
                    │   END   │                                     │
                    └─────────┘                                     │
```

# FIG.15

```
        ┌──────────────┐
        │    START     │
        └──────┬───────┘
               │
               ▼
   ┌───────────────────────────┐
   │  SET DETECTION INTERVAL   │──── S1501
   └───────────┬───────────────┘
               │
               ▼            S1502
            ◇ IS
            NUMBER OF
            MANIPULATIONS ──── NO ──────────────┐
            ONE? ◇                              │
               │ YES                            │
               ▼         S1503                  ▼         S1504
   ┌───────────────────────────┐   ┌───────────────────────────┐
   │ CALCULATE PRIORITY IP_{w0}│   │ CALCULATE PRIORITY IP_{w1}│
   └───────────┬───────────────┘   └───────────┬───────────────┘
               │◄───────────────────────────────┘
               ▼
   ┌───────────────────────────┐
   │   SELECT HIGHLIGHT SCENE  │──── S1505
   └───────────┬───────────────┘
               │
               ▼
        ┌──────────────┐
        │     END      │
        └──────────────┘
```

## INTERNATIONAL SEARCH REPORT

| International application No. |
|---|
| PCT/JP2006/316420 |

A. CLASSIFICATION OF SUBJECT MATTER
*H04N5/76*(2006.01)i, *G11B20/10*(2006.01)i, *G11B27/10*(2006.01)i, *H04N5/93*
(2006.01)i

According to International Patent Classification (IPC) or to both national classification and IPC

B. FIELDS SEARCHED

Minimum documentation searched (classification system followed by classification symbols)
H04N5/76, G11B20/10, G11B27/10, H04N5/93

Documentation searched other than minimum documentation to the extent that such documents are included in the fields searched
Jitsuyo Shinan Koho         1922-1996   Jitsuyo Shinan Toroku Koho   1996-2006
Kokai Jitsuyo Shinan Koho    1971-2006   Toroku Jitsuyo Shinan Koho   1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 2005-73294 A  (Sony Corp.),<br>17 March, 2005 (17.03.05),<br>Par. Nos. [0025] to [0050]; all drawings<br>(Family: none) | 1-12 |
| Y | JP 2001-320677 A  (LG Electronics Inc.),<br>16 November, 2001 (16.11.01),<br>Par. Nos. [0021], [0055]; all drawings<br>& EP 1134975 A2          & US 2001/053277 A1<br>& US 2006/062549 A1 | 1-12 |

| ☐ | Further documents are listed in the continuation of Box C. | ☐ | See patent family annex. |
|---|---|---|---|

* Special categories of cited documents:
"A" document defining the general state of the art which is not considered   to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search<br>27 November, 2006 (27.11.06) | Date of mailing of the international search report<br>05 December, 2006 (05.12.06) |
|---|---|
| Name and mailing address of the ISA/<br>Japanese Patent Office | Authorized officer |
| Facsimile No. | Telephone No. |

Form PCT/ISA/210 (second sheet) (April 2005)

EP 1 924 092 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 134415 A

- JP 333463 A